# EUROPEAN PATENT APPLICATION

(11) **EP 2 735 952 A1**
(43) Date of publication of application: **28.05.2014**
(21) Application number: 14156226.4
(22) Date of filing: 31.03.2009
(51) Int. Cl.: G06F 3/048, G06F 3/01

(54) **Display apparatus and control method thereof**

(30) Priority: 19.09.2008 KR 20080092262
(62) Divisional of application: 09156981.4
(71) Applicant: Samsung Electronics Co., Ltd., Suwon-si Gyeonggi-do 443-742 (KR)
(72) Inventor: Son, Hyun-seok, Gyeonggi-do (KR); Kim, Jae-hwan, Gyeonggi-do (KR)
(74) Representative: Tindall, Adam

(57) **Abstract**

There are provided a display apparatus and a control method thereof. The display apparatus includes: an image processing part which processes an image; a display part which displays the image processed by the image processing part; an input part which recognizes a number of a multi-motion received from a user; and a controller which controls the image processing part to display the image according to the number of the multi-motion.

## Description

### BACKGROUND OF INVENTION

### Field of Invention

Apparatuses and methods consistent with the present invention relate to a display apparatus and a control method thereof which can rapidly and conveniently search and change a channel.

### Description of Related Art

Nowadays, a touch recognition technology is widely used in a variety of applications. The touch recognition technology may be classified as follows:
A capacitive technology uses a finger (or stylus) as a shunt for a small alternating current. The current flows through the body of a user to the ground. When the finger meets an array of an infrared beam while scanning an infrared system, a touch of the user is registered.
A surface acoustic wave touch screen absorbs acoustic waves propagated on a touch surface. In this case, a touch of a user is recognized by a drop in an acoustic signal from a touched position.
A resistive touch technology is based on two conductive material layers which are separated by a small spacer. If a screen is touched, two films come into contact with each other and 2-dimensional coordinate information is generated by a voltage generated in a touched position.

The touch recognition technology is generally realized into a touch pad and a touch screen.

The touch pad is a small flat panel having a pressure sensor and is used as an input device for replacement of a mouse. If a user contacts the touch pad using a finger or a pointing device, a cursor moves by a contact pressure, and thus, a computer recognizes position information.

The touch screen is a display which can detect the presence and location of a touch by a finger or a pointing device within a display area for a specific process by software.

A user can conveniently control electronic devices by a remote controller mounted with such a touch pad or touch screen.

Recently, the number of cable broadcasting channels have rapidly increased. Thus, channel search and change becomes more and more inconvenient.

### SUMMARY OF THE INVENTION

Accordingly, it is an aspect of the present invention to provide a display apparatus and a control method thereof which can rapidly and conveniently search and change a channel using a touch recognition technology.

According to the present invention there is provided an apparatus and method as set forth in the appended claims. Other features of the invention will be apparent from the dependent claims, and the description which follows.

The foregoing and/or other aspects of the present invention can be achieved by providing a display apparatus including: an image processing part which processes an image; a display part which displays the image processed by the image processing part; an input part which recognizes a number of a multi-motion received from a user; and a controller which controls the image processing part to display the image according to the number of the multi-motion.

The number of the multi-motion may include a number of motions which are simultaneously received from the user or a number of motions which are consecutively received, for a predetermined time, from the user.

The user input part may include a touch screen or a touch pad.

The multi-motion may include a touch against the touch screen or the touch pad.

The image may correspond to at least one of a channel, an image source and a menu.

The controller may control the image processing part to display an image corresponding to a channel skipped from a current channel by the number of the multi-motion.

The controller may control the image processing part to display the image according to a direction of the multi-motion.

The controller may control the image processing part to change the channel upwardly or downwardly according to the direction of the multi-motion.

The controller may control the image processing part to change a current image into an image skipped by the number of the multi-motion according to the direction of the multi-motion.

The foregoing and/or other aspects of the present invention can be achieved by providing a display apparatus including: an image processing part which processes an image; a display part which displays the image processed by the image processing part; a communication part which receives information about a number of a multi-motion from a user recognized by an outside input device, from the outside input device; and a controller which controls the image processing part to display the image according to the number of the multi-motion.

The foregoing and/or other aspects of the present invention can be achieved by providing a control method of a display apparatus, the method including: recognizing a number of a multi-motion received from a user; and displaying an image according to the number of the recognized multi-motion.

The number of the multi-motion may include a number of motions which are simultaneously received from the user or a number of motions which are consecutively received, for a predetermined time, from the user.

The multi-motion may include a touch against a touch screen or a touch pad.

The image may correspond to at least one of a channel, an image source and a menu.

The displaying the image may include displaying an image corresponding to a channel skipped from a current channel by the number of the multi-motion.

The displaying the image may include displaying the image according to a direction of the multi-motion.

The displaying the image may include changing the channel upwardly or downwardly according to the direction of the multi-motion.

The displaying the image may include changing a current image into an image skipped by the number of the multi-motion according to the direction of the multi-motion.

### BRIEF DESCRIPTION OF THE DRAWINGS

The above and/or other aspects of the present invention will become apparent and more readily appreciated from the following description of the exemplary embodiments, taken in conjunction with the accompanying drawings, in which:
FIG. 1 schematically illustrates a display apparatus according to an exemplary embodiment of the present invention;
FIG. 2 schematically illustrates a display apparatus according to another exemplary embodiment of the present invention;
FIGS. 3A, 3B and 3C illustrate examples of an image controlled according to an exemplary embodiment of the present invention;
FIG. 4 is a flowchart illustrating a control process of a display apparatus according to an exemplary embodiment of the present invention.
FIG. 5 is a flowchart illustrating a control process of a display apparatus according to another exemplary embodiment of the present invention.

### DETAILED DESCRIPTION OF EXEMPLARY EMBODIMENTS OF THE INVENTION

Reference will now be taken in detail to the exemplary embodiments of the present invention, examples of which are illustrated in the accompanying drawings, wherein like reference numerals refer to like elements throughout. The exemplary embodiments are described below so as to explain the present invention by referring to the figures. Redundant description to different exemplary embodiments may be omitted as necessary.

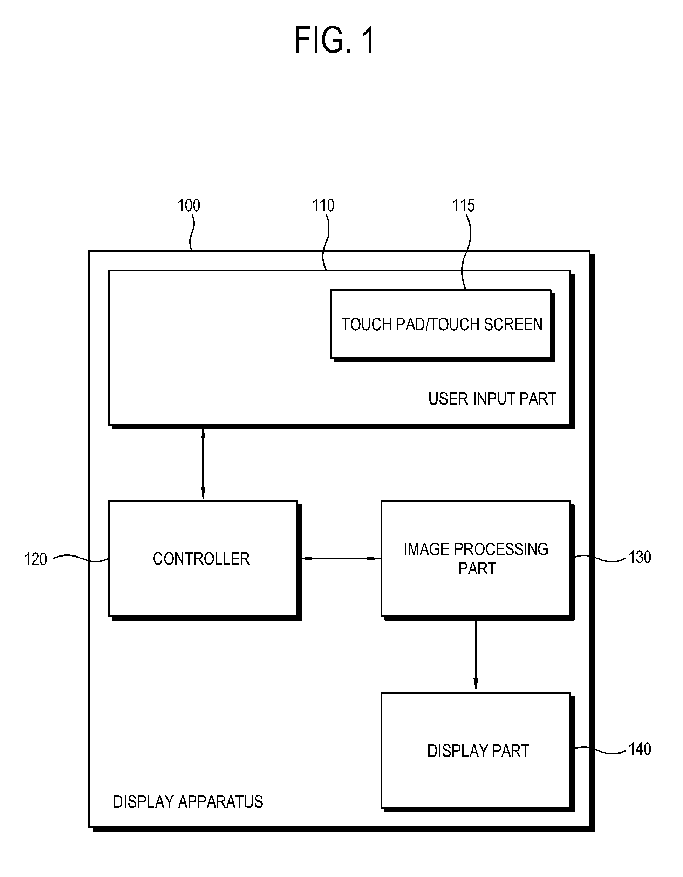

FIG. 1 schematically illustrates a display apparatus 100 according to an exemplary embodiment of the present invention.

The display apparatus 100 may be an electronic device such as a digital TV, desktop computer, laptop computer, mobile terminal, PDA (Personal Digital Assistant) and MP3 (MPEG Audio Layer-3).

The display apparatus 100 may include a user input part 110, a controller 120, an image processing part 130, and a display part 140.

The user input part 110 recognizes the direction and the number of a multi-motion of a user. The user input part 110 may include a touch screen or touch pad 115.

The term 'multi-motion' refers to a plurality of motions which is simultaneously or sequentially taken by a user. The multi-motion may be taken in a variety of manners by the user. For example, the user may contact the touch screen or pad 115 using a plurality of fingers for the multi-motion.

The controller 120 may control the image processing part 130 to display an image according to the number of the multi-motion recognized by the user input part 110. More specifically, the controller 120 may control the image processing part 130 to display an image corresponding to a channel skipped from the current channel by the number of the multi-motion. In this respect, the controller 120 may upwardly or downwardly skip the channel by a user selection. Alternatively, the upward or downward skip or change direction may be determined according to the multi-motion direction.

For example, in the case of the upward change direction, while watching a broadcasting channel '11', if the number of the multi-motion taken by a user is two, the controller 120 controls the image processing part 130 to display an image corresponding to a channel '13' skipped by two channels from the current channel.

Further, the controller 120 may control the image processing part 130 to display an image according to a multi-motion direction recognized by the user input part 110. For example, the channel may be upwardly or downwardly changed according to the multi-motion direction. For example, if a multi-motion is taken from the left side to the right side of a screen, the channel may change upwardly; and if a multi-motion is taken from the right side to the left side, the channel may change downwardly.

Furthermore, the controller 120 may control the image processing part 130 to display an image according to the direction and the number of the multi-motion. In this case, an image may be displayed which is skipped by the number of the multi-motion according to the direction of the multi-motion.

The image processing part 130 processes an image. More specifically, the image processing part 130 performs decoding, scaling, image enhancement, brightness and darkness control, to an input image.

Further, the image processing part 130 may change an image under the control of the controller 120. In this respect, the image may correspond to at least one of a channel, an image source and a menu. If the image corresponds to the channel, the image processing part 130 changes the current image into an image corresponding to the selected channel. If the image corresponds to the image source, the image processing part 130 changes the current image into an image corresponding to the selected image source. Also, if the image corresponds to the menu, the image processing part 130 changes the current image into an initial image corresponding to the selected menu.

The display part 140 displays the image processed by the image processing part 130. The display part 140 may be embodied as an LCD (Liquid Crystal Display), OLED (Organic Light Emitting Display) and PDP (Plasma Display Panel) or the like.

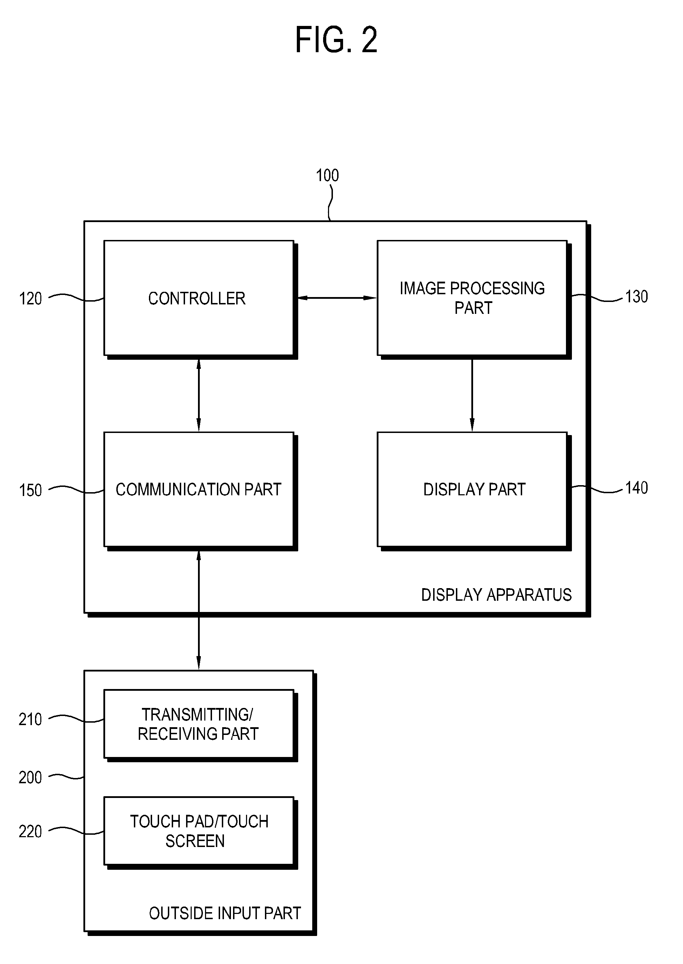

FIG. 2 schematically illustrates a display apparatus 100 according to another exemplary embodiment of the present invention.

The display apparatus 100 is controlled by an outside input device 200, different from the first exemplary embodiment. That is, a user may take a multi-motion using the outside input device 200, thereby controlling an image to be displayed in the display apparatus 100.

The display apparatus 100 according to the second exemplary embodiment may include a communication part 150; a controller 120; an image processing part 130; and a display part 140.

The communication part 150 performs communication with the outside input device 200 and receives a control command which is inputted through the outside input device 200 by a user from the outside input device 200. The control command may relate to change of a channel, image source or menu.

The user may input the control command through a multi-motion. Accordingly, the communication part 150 may receive information about the number and direction of the user multi-motion recognized by the outside input device 200, from the outside input device 200.

In this respect, the communication part 150 may perform communication through a communication interface which is defined as a general standard according to the type of the display apparatus 100.

The outside input device 200 controls the display apparatus 100 according to the control method inputted by the user, and may be embodied as a remote controller or any other electronic device.

The outside input device 200 may include a transmitting/receiving part 210; and a touch screen or touch pad 220.

The transmitting/receiving part 210 performs communication with the display apparatus 100. Further, the transmitting/receiving part 210 transmits the user input control command through the outside input device 200 to the display apparatus 100.

The touch screen or pad 220 may recognize the multi-motion of the user. For example, if the user multi-touches the touch screen or pad 220, the touch screen or pad 220 may recognize the number and direction of the multi-touch.

The outside input device 200 may further include a motion recognition sensor (not shown) as necessary.

The motion recognition sensor may sense a movement of the outside input device 200. For example, if a user moves or shakes the outside input device 200 in a specific direction, the motion recognition sensor can recognize it. In this way, if the outside input device 100 includes the motion recognition sensor, the user may take a multi-motion for directly moving the outside input device 200 to control the display apparatus 100.

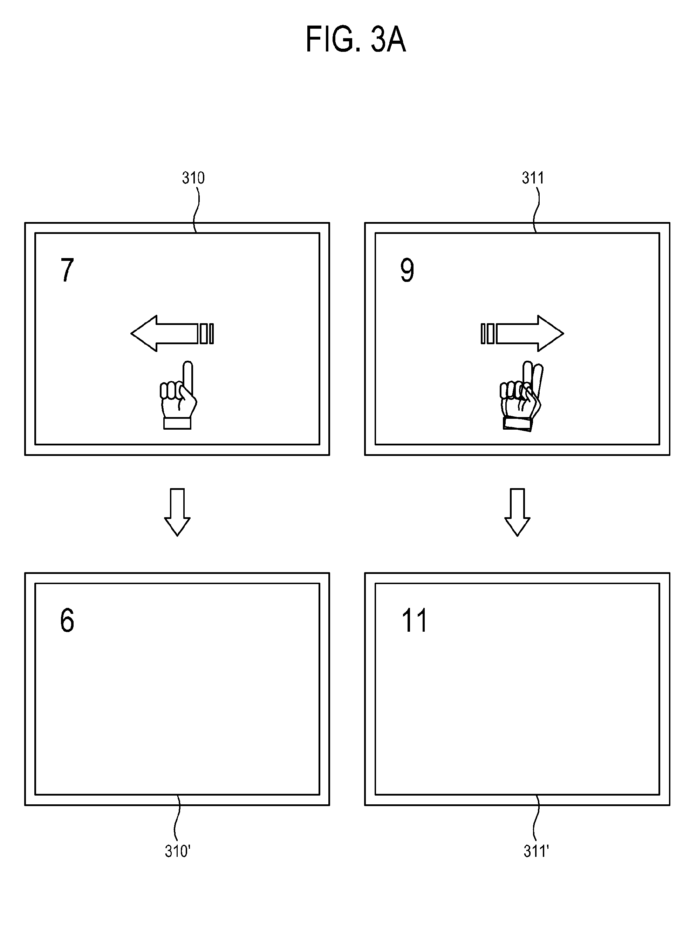

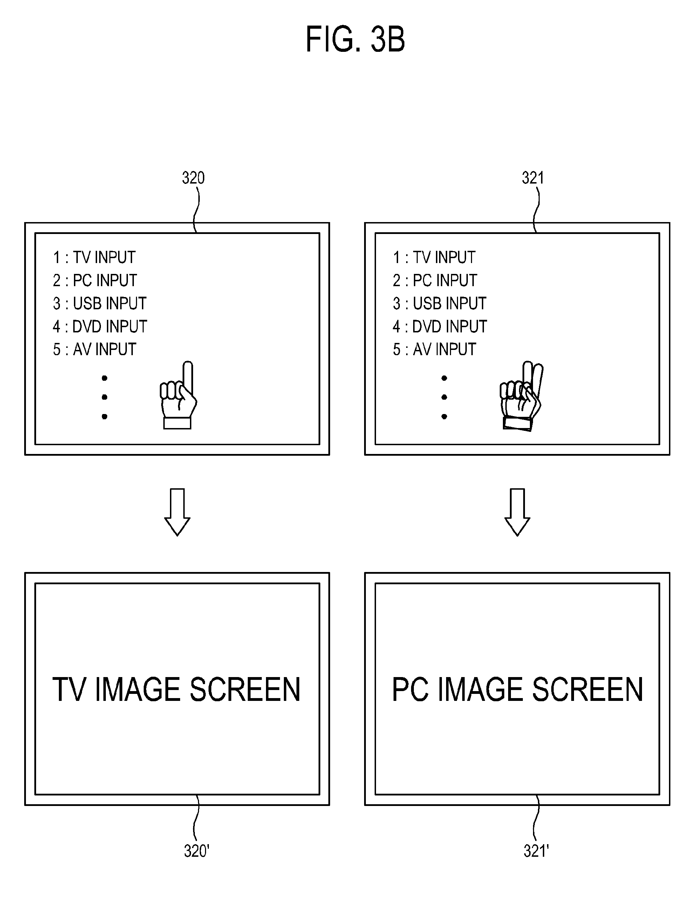

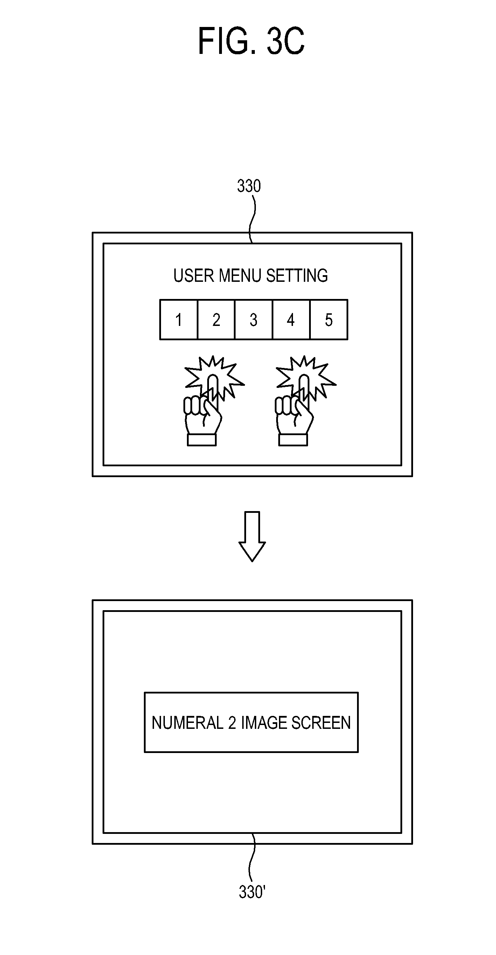

As described above, an image to be displayed corresponds to at least one of the channel, image source and menu. Hereinafter, a process of controlling the image corresponding to the channel, image source or menu will be described referring to FIGS. 3A, 3B and 3C. In FIGS. 3A and 3B, it is assumed that a multi-motion of a user is a multi-touch.

In FIG. 3A, an image is displayed corresponding to a channel. In this case, the display apparatus 100 changes the current image into an image of the channel selected according to the multi-touch of the user. The channel may be changed according to the number and/or direction of the multi-touch.

The direction of the multi-touch may be horizontal or vertical. For example, in the case of the horizontal multi-touch, if the multi-touch is taken from the left side to the right side in the touch screen or pad, the channel may change upwardly; and if the multi-touch is taken from the right side to the left side, the channel may change downwardly. In the case of the vertical multi-touch, the channel may change upwardly or downwardly in a similar way. In this respect, the channel change according to the direction of the multi-touch may be variously determined according to a user selection.

The number of the multi-touch may include the number of touches which are simultaneously taken or the number of touches which are consecutively taken for a predetermined time.

The number of the multi-touch which is simultaneously taken may be the number of fingers that contact the touch screen or pad (115 or 220) at the same time. For example, if the user simultaneously contacts the touch screen or pad (115 or 220) by the thumb, forefinger and middle finger, the number of simultaneous touches is three. Accordingly, the number of the multi-touch is three.

The number of touches consecutively taken for a predetermined time refers to the number of repeated touches against the touch screen or pad (115 or 220). For example, if the user touches the touch screen or pad two times by the forefinger, the number of the touches consecutively taken for a predetermined time is two. Accordingly, the number of the multi-touch is two.

Referring to the upper left side of FIG. 3A, an image screen 310 currently displayed on the display apparatus 100 corresponds to, for example, a broadcasting channel '7'. If a user touches with one finger the image screen 310 from the right side to the left side thereof (in the case that the channel is set to change downwardly), the display apparatus 100 recognizes that the number of the multi-touch is one. Accordingly, the display apparatus 100 downwardly changes the current channel into a channel '6' to display an image screen 310', as shown in the lower left side of FIG. 3A.

Referring to the upper right side of FIG. 3A, an image screen 311 currently displayed on the display apparatus 100 corresponds to, for example, a broadcasting channel '9'. If a user touches with two fingers the image screen 311 from the left side to the right side thereof (in the case that the channel is set to change upwardly), the display apparatus 100 recognizes that the number of the multi-touch is two. Accordingly, the display apparatus 100 upwardly changes the channel into a channel '11' to display an image screen 311', as shown in the lower right side of FIG. 3A.

Referring to FIG. 3B, an image is displayed corresponding to an image source. In this case, the display apparatus 100 changes the image into an image screen of an image source selected by a multi-touch of a user. In this respect, a numeral is previously given to each image source. In FIG. 3B, a numeral 1 corresponds to a TV input; a numeral 2 to a PC input; a numeral 3 to a USB input; a numeral 4 to a DVD input; and a numeral 5 to an AV input. In this case, the display apparatus 100 may directly display an image of an image source having a numeral corresponding to the number of the multi-touch by a user.

Referring to the upper left side of FIG. 3B, a user touches with one finger an image screen 320 displayed on the display apparatus 100. In this case, the display apparatus 100 recognizes that the number of the multi-touch is one, and then displays a TV screen 320' corresponding to the numeral 1, as shown in the lower left side of FIG. 3B.

Referring to the upper right side of FIG. 3B, the user touches with two fingers an image screen 321 displayed on the display apparatus 100. In this case, the display apparatus 100 recognizes that the number of the multi-touch is two, and then displays a PC screen 321' corresponding to the numeral 2, as shown in the lower right side of FIG. 3B.

In this way, the display apparatus 100 can directly change the current image source into an image source having the same numeral, according to the number of multi-touching fingers.

Referring to FIG. 3C, an image is displayed corresponding to a menu. In this case, the display apparatus 100 converts the current image into an initial image screen of a menu selected by a multi-touch of a user. In this respect, a numeral is previously given to each menu. The display apparatus 100 may display an image of a menu having a numeral corresponding to the number of the multi-touch by the user.

As shown in FIG. 3C, the user consecutively may touch a menu selection screen 330 two times using one finger. In this case, the display apparatus 100 recognizes that the number of the multi-touch is two, and then displays an image screen 330' corresponding to the numeral 2.

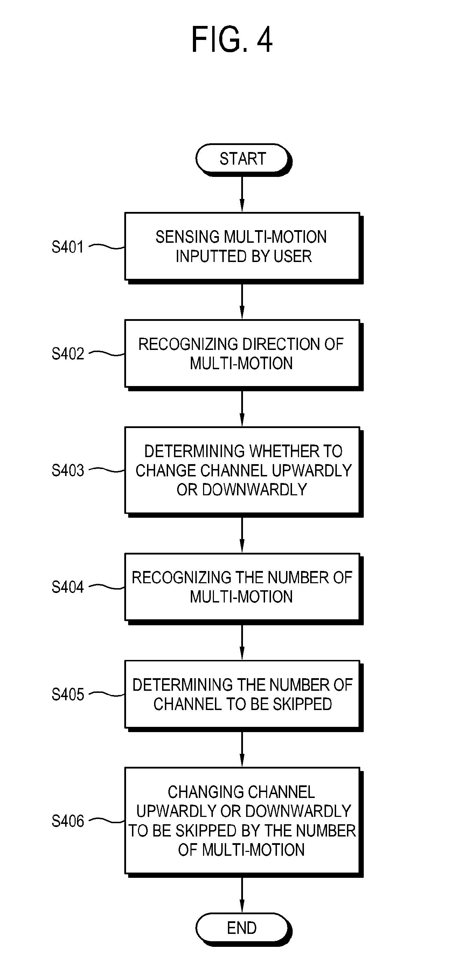

Hereinafter, a control process of a display apparatus according to an exemplary embodiment of the present invention will be described with reference to FIG. 4.

Firstly, a user inputs a multi-motion to the display apparatus 100. For example, the user may multi-touch the touch screen or pad 115. The display apparatus 100 senses the input multi-motion (S401).

Then, the display apparatus 100 recognizes the direction of the multi-motion (S402). For example, in the case of the multi-touch, the display apparatus 100 may recognize the direction (that is, horizontal or vertical direction) to which a finger of the user contacts the touch screen or pad 115.

The display apparatus 100 determines whether to change the channel upwardly or downwardly according to the direction of the multi-motion recognized in operation S402 (S403).

The display apparatus 100 recognizes the number of the multi-motion (S404). For example, in the case of the multi-touch, the display apparatus 100 may recognize the number of fingers that contact the touch screen or pad 115 at the same time.

The display apparatus 100 determines the number of channels to be skipped for change, according to the number of the multi-motion recognized in operation S404 (S405).

The display apparatus 100 changes the current channel upwardly or downwardly into a channel by skipping channels by the number of the multi-motion.

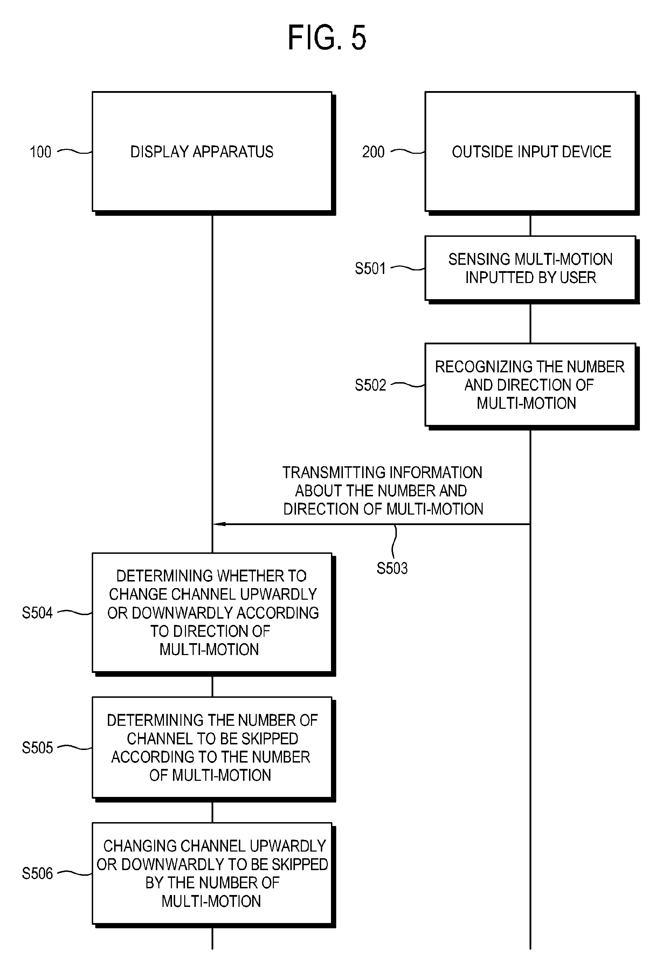

Hereinafter, a control process of a display apparatus according to another exemplary embodiment of the present invention will be described with reference to FIG. 5.

Firstly, a user inputs a multi-motion to the outside input device 200. In the case that the outside input device 200 is embodied as a remote controller, the user may multi-touch the touch screen or pad 220 installed in the remote controller. Alternatively, the user may move the remote controller in a specific direction. The outside input device 200 senses the input multi-motion (S501).

Then, the outside input device 200 recognizes the number and the direction of the multi-motion (S502). In the case of multi-touch, the outside input device 200 may sense the (horizontal or vertical) direction to which a finger of the user contacts the touch screen or pad 220 to recognize the number of the multi-motion. Alternatively, the outside input device 220 may sense the number of fingers that contact the touch screen or pad 220 at the same time to recognize the number of the multi-motion.

The outside input device 200 transmits information about the number and the direction of the recognized multi-motion to the display apparatus 100 (S503).

The display apparatus 100 determines whether to change the channel upwardly or downwardly according to the direction of the multi motion (S504).

The display apparatus 100 determines the number of channels to be skipped for change according to the number of the multi-motion (S505).

The display apparatus 100 changes the channel upwardly or downwardly by skipping channels by the number of the multi-motion (S506).

As described above, according to the present invention, a user can rapidly and conveniently search a desired channel among a number of channels through a multi-touch against a touch screen or pad.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

The apparatus and control method of the present disclosure is further described in the following paragraphs.

There may be provided a display apparatus (100) comprising: an image processing part (130) which processes an image; a display part (140) which displays the image processed by the image processing part (130); an input part (110) which recognizes a number of a multi-motion received from a user; and a controller (120) which controls the image processing part (130) to display the image according to the number of the multi-motion.

The number of the multi-motion may comprise a number of motions which are simultaneously received from the user or a number of motions which are consecutively received, for a predetermined time, from the user.

The user input part (110) may comprise a touch screen or a touch pad.

The multi-motion may comprise a touch against the touch screen or the touch pad.

The image may correspond to at least one of a channel, an image source and a menu.

The controller (120) may control the image processing part (130) to display an image corresponding to a channel skipped from a current channel by the number of the multi-motion.

The controller (120) may control the image processing part (130) to display the image according to a direction of the multi-motion.

The controller (120) may control the image processing part (130) to change the channel upwardly or downwardly according to the direction of the multi-motion.

The controller (120) may control the image processing part (130) to change a current image into an image skipped by the number of the multi-motion according to the direction of the multi-motion.

There may also be provided a display apparatus (100) comprising: an image processing part (130) which processes an image; a display part (140) which displays the image processed by the image processing part (130); a communication part (150) which receives information about a number of a multi-motion from a user recognized by an outside input device (200), from the outside input device (200); and a controller (120) which controls the image processing part (130) to display the image according to the number of the multi-motion.

There may also be provided a control method of a display apparatus (100), the method comprising: recognizing a number of a multi-motion received from a user; and displaying an image according to the number of the recognized multi-motion.

The number of the multi-motion may comprise a number of motions which are simultaneously received from the user or a number of motions which are consecutively received, for a predetermined time, from the user.

The multi-motion may comprise a touch against a touch screen or a touch pad. The image may correspond to at least one of a channel, an image source and a menu. The displaying the image may comprise displaying an image corresponding to a channel skipped from a current channel by the number of the multi-motion.

## Claims

1. A display apparatus (100) comprising:
a display unit (140) which displays an image;
an input unit (110) which detects a touch number of a multi-touch input which is simultaneously received from a user; and
a controller (120) which controls the display unit (140) to display a selected menu from a menu having a numerical order based on the detected touch number of the multi-touch input.

2. A display apparatus (100) comprising:
a display unit (140) which displays an image;
an input unit (110) which detects a touch number of a multi-touch input which is consecutively received from a user for a predetermined time; and
a controller (120) which controls the display unit (140) to display a selected menu from a menu having a numerical order based on the detected touch number of the multi-touch.

3. The apparatus according to claim 1 or claim 2, wherein the input unit (110) comprises a touch screen or a touch pad.

4. The apparatus according to claim 3, wherein the multi-touch input comprises a touch against the touch screen or the touch pad.

5. A control method of a display apparatus (100), the method comprising:
displaying a menu having a numerical order;
detecting a touch number of a multi-touch input which is simultaneously received from a user; and
displaying a selected menu from the menu based on the detected touch number of the multi-touch input.

6. A control method of a display apparatus (100), the method comprising:
displaying a menu having a numerical order;
detecting a touch number of a multi-touch input which is consecutively received from a user for a predetermined time; and
displaying a selected menu from the menu based on the detected touch number of the multi-touch input.

7. The method according to claim 5 or claim 6, wherein the multi-touch input comprises a touch input against a touch screen or a touch pad.
